# EUROPEAN PATENT SPECIFICATION

(11) **EP 3 281 727 B1**
(45) Date of publication and mention of the grant of the patent: **04.10.2023**
(21) Application number: 16183593.9
(22) Date of filing: 10.08.2016
(51) Int. Cl.: B22F 3/105, B28B 1/00, B29C 67/00, B33Y 30/00, B29C 64/153, B29C 64/20, B22F 12/45, B22F 10/28, B22F 12/55

(54) **APPARATUS FOR PRODUCING THREE-DIMENSIONAL WORKPIECE COMPRISING A PLURALITY OF POWDER APPLICATION DEVICES**
VORRICHTUNG ZUR HERSTELLNG EINES DREIDIMENSIONALEN WERKSTÜCKS MIT MEHREREN PULVERAPPLIKATIONSVORRICHTUNGEN
APPAREIL DE PRODUCTION DE PIÈCES TRIDIMENSIONNELLES COMPRENANT UNE PLURALITÉ DE DISPOSITIFS D'APPLICATION DE POUDRE

(43) Date of publication of application: 14.02.2018
(73) Proprietor: SLM Solutions Group AG, 23560 Lübeck (DE)
(72) Inventor: KROL, Toni Adam, 23560 Lübeck (DE); SCHWARZE, Dieter, 23560 Lübeck (DE); SCHÖNEBORN, Henner, 23560 Lübeck (DE); ROESGEN, Lukas, 23560 Lübeck (DE)
(74) Representative: Schicker, Silvia

(56) References cited:
- EP-A1- 3 106 288
- EP-A1- 3 390 002
- JP-A- 2001 150 557
- US-A1- 2006 108 712
- US-A1- 2012 211 155

## Description

The present invention relates to an apparatus for producing a three-dimensional workpiece by irradiating layers of a raw material powder with electromagnetic or particle radiation, the apparatus comprising a plurality of powder application devices. Furthermore, the invention relates to a method for operating an apparatus of this kind.

Powder bed fusion is an additive layering process by which pulverulent, in particular metallic and/or ceramic raw materials, can be processed to three-dimensional workpieces of complex shapes. To that end, a raw material powder layer is applied onto a carrier and subjected to laser radiation in a site selective manner in dependence on the desired geometry of the workpiece that is to be produced. The laser radiation penetrating into the powder layer causes heating and consequently melting or sintering of the raw material powder particles. Further raw material powder layers are then applied successively to the layer on the carrier that has already been subjected to laser treatment, until the workpiece has the desired shape and size. Selective laser melting or laser sintering can be used in particular for the production of prototypes, tools, replacement parts or medical prostheses, such as, for example, dental or orthopaedic prostheses, on the basis of CAD data.

For carrying out a respective workpiece production process, a powder application device is used which deposits the raw material powder onto a designated build area of the carrier to form raw material powder layers thereon. An example of such a device can be found in EP 2 818 305 A1. Typically, the powder application device moves along the build area while discharging raw material powder, thus producing a new uppermost raw material powder layer which can then be irradiated and solidified to produce a workpiece layer. Alternatively, solutions are known in which a separate and preferably stationary powder storage is provided above an area of the carrier that is preferably not used as a build area. This way, powder may be selectively released and discharged onto the carrier to then being pushed by an approaching powder application device onto an adjacent build area. Accordingly, the raw material powder is distributed on and across the build area, thereby depositing a new raw material powder layer onto the build area. For doing so, the powder distribution device may comprise a suitable lip or blade structure facing the build area. In the context of the present disclosure, both of the above alternatives (i.e., powder application device with integrated storage and a powder application device with separate storage) are intended to be covered by the feature of a powder application device depositing raw material powder onto the build area.

In general, during operation of the powder application device, no actual workpiece production takes place. Instead, prior to starting the irradiation, depositing the new raw material powder layer typically has to be completed first. Consequently, prior art solutions often suffer from a relatively large non-productive or secondary processing time during operation of the powder application device compared to the actual primary processing time which includes operating the irradiation device.

Attempts have been made to compensate for this lack of productivity by enlarging respective apparatuses, so that they comprise a plurality of build areas, one of which can be irradiated while the other one is provided with a new raw material powder layer. Yet, such apparatuses are often costly and complex.

US 2012/0211155 A1 discloses a device and a method for generative production in which a substrate plate is subdivided into substrate plate segments that are detachably joint to each other or to a base carrier and on which individual products are produced.

US 2006/108712 A1 discloses a solution for layer-wise generative manufacturing in which a building region is rotationally moved with respect to a material application device.

JP 2001 150557 A discloses a solution for supplying a powdery material by means of a transfer member from a position outside of a shaping region into said shaping region.

EP 3 106 288 A1, which was published after the application date of the present application, discloses an additive manufacturing apparatus including first and second spaced apart side walls extending along a pre-defined path and defining a build chamber therebetween, one or more build units mounted for movement along the pre-defined path, the one or more build units including at least one of a powder dispenser positioned above the build chamber, an applicator configured to scrape powder dispensed into the build chamber, and a directed energy source configured to fuse the scraped powder.

EP 3 390 002 A1, which was published after the application date of the present application, discloses a device for the continuous generative manufacturing of three-dimensional components, which are formed by multiple layers built up one on top of the other, wherein a number of fusing devices for fusing an applied powdered material are arranged in a sequence one behind the other with respect to a working and transporting platform and the distance from each individual fusing device to the working and transporting platform increases from a first fusing device to a last fusing device of the sequence, and so, when a relative movement takes place between the fusing devices and the working and transporting platform for the forming of a layer, at the same time a layer is formed with each further fusing device following the first fusing device on the layer formed by means of the fusing device respectively preceding it in the sequence.

The invention is thus directed at the object of providing an apparatus for producing a three-dimensional workpiece by irradiating layers of a raw material powder with electromagnetic or particle radiation which is marked by an increased productivity. Furthermore, the invention is directed at the object of providing a method for operating an apparatus of this kind.

This object is addressed by an apparatus as defined in claim 1 and a method as defined in claim 12.

An apparatus for producing a three-dimensional workpiece comprises a carrier for receiving a raw material powder. The carrier may be a rigidly fixed carrier. According to one embodiment, however, the carrier is designed to be displaceable in vertical direction so that, with increasing construction height of a workpiece as it is built up in layers from the raw material powder, the carrier can be moved downwards and/or upwards in the vertical direction.

The apparatus further comprises at least a first irradiation device for selectively irradiating an electromagnetic or particle radiation beam onto raw material powder being deposited on at least one build area of the carrier in order to produce a workpiece made of said raw material powder by an additive layer construction method (i.e., irradiating predetermined irradiating sites to produce single workpiece layers). The irradiation device may be configured to irradiate externally accessible or exposed regions of a raw material powder layer on said build area, thereby heating it to a specific temperature which allows a site-selective sintering and/or melting of the raw material powder. This way, a solidified layer of the three-dimensional workpiece can be generated. Note that in the following this irradiating and solidifying may be referred to as processing a raw material powder layer and, if all predetermined irradiating sites of said layer have been irradiated (i.e., the production of the associated workpiece layer has been completed), said raw material powder layer can be considered as having been processed.

The apparatus may further be configured to, in a generally known manner, carry out a cyclic process by adding further layers of raw material onto the carrier, and specifically onto the just produced workpiece layer. Following that, the irradiation device can perform site-selective irradiation of said new layer to produce a further workpiece layer on top of the previous one. This can be repeated until the workpiece is completed. As further detailed below, a sequence of raw material powder layers may thus be deposited or stacked onto the build area and processed, the layers being arranged at increasing height levels relative to said build area and carrier. This way, the so-called build height of the workpiece can be continuously increased.

Note that a respective deposition of raw material powder and the formation of associated layers on the build area thus also includes depositing said powder material onto workpiece or raw material powder layers being already present on said build area. In other words, the deposition of raw material powder onto said build area may not necessarily include a direct physical contact between said powder and a respective section of the carrier. Rather, this may also be understood as discharging and/or distributing raw material powder above/on or in the region of the build area, thereby depositing it onto the build area and on top of further layers being possibly already present thereon. In other words, the deposition of raw material powder onto the build area may also include forming a new raw material powder layer that is (preferably) congruent to the build area but arranged at a different height level relative to the carrier.

In the present context, the term "build area" may generally relate to a designated area of the carrier in which one or a plurality of workpieces is to be produced. In other words, the carrier may define a large base area onto which the raw material powder is deposited and the build area may relate to a fraction of said base area in which the actual production of a workpiece is supposed to take place. Said fraction may range anywhere between 100% to 1%. To put it differently, the build area thus defines a maximum possible footprint of a workpiece being produced. Also, the carrier may generally comprise a plurality of respective build areas. Likewise, the carrier may generally be formed by a single member or comprise a plurality of sub-members (e.g. a plurality of sub-carriers each forming part of the total carrier area). Such a modular structure of the carrier may be of advantage when producing comparatively large workpieces. Consequently, the build area may also extend over or include a respective plurality of (sub-) members of the carrier.

The irradiation device may further comprise a sintering/melting radiation source, such as a laser source, and at least one optical unit (irradiation unit) for guiding and/or processing a sintering/melting radiation beam emitted by the sintering/melting radiation source. The optical unit (irradiation unit) may comprise optical elements such as an object lens, in particular an f-theta lens, and a scanner unit, the scanner unit preferably comprising a diffractive optical element and a deflection mirror. The irradiation device may comprise only one irradiation unit or a plurality of irradiation units each being adapted to emit electromagnetic or particle radiation which allows a site-selective sintering and/or melting of the raw material powder.

The apparatus further comprises at least a first and a second powder application device being configured to simultaneously deposit raw material powder onto the same build area to produce a sequence of raw material layers on top of one another. Specifically, one of said powder application devices may deposit a lower raw material powder layer onto said build area, whereas the other may deposit an upper raw material powder layer on top of said lower layer. Preferably, these layers are formed with a predetermined and/or uniform thickness. Note that this new lower raw material powder may generally represent the layer of raw material powder which is to be processed next in order to produce a new workpiece layer. Also, the powder application devices may be configured according to any of the previously discussed alternatives or even combinations thereof, i.e. as a powder application device with an integrated storage which directly discharges raw material powder onto the build area and/or a powder application device distributing separately discharged raw material powder on the build area, thereby depositing a new layer thereon.

In this context, the term simultaneously may denote a time-related overlap in the sense of both powder application devices operating on the same build area at the same time but possibly in different regions thereof. Specifically, this may include that one of the powder application devices producing said upper raw material powder layer commences depositing raw material onto said build area before the other powder application device has completed producing said lower raw material layer. This also means that during operation of the powder application devices, the build area may comprise at least a first region including no raw material powder layer or only an already processed layer, a second region including a new lower raw material powder layer produced by one of said powder application devices and a third region including a new upper raw material powder layer that is deposited on top of said lower raw material layer.

Note that depending on the current operating state of the apparatus, the size and share of said regions may vary and generally assume any area share between and including 0% to 100% of the build area. Yet, the invention contemplates that at least the second region assumes a value different from 0% for a certain amount of time and, preferably, between 2% and 98%, 10% and 80%, 20% and 60%, 2% and 10% or 5% and 20%. This may generally apply to the complete time period of simultaneous deposition by way of said powder application devices until at least one of the said devices has completed depositing its respective raw material powder layer. In other words, as long as the powder application devices enclose a section of the build area between them, it is contemplated that said section (being typically equivalent to the second region referred to above) always assumes a value in one of the above ranges, e.g. between 20% and 60% of the build area.

This also means that the first and second powder application devices can be generally operable so as to (at least temporarily and/or for a predetermined period of time and/or along a predetermined portion of the build area) include or enclose a section of the build area between them. The term enclosed may relate to the powder application devices being arranged at opposite sides of the respective section of the build area and/or extending at least partially along two different and preferably opposite sides of said build area. In other words, the section of the build area between the powder application devices may be enclosed by the powder application devices when viewed along at least one spatial axis of the build area or along a possible movement direction of the powder application devices along said build area. Said section may further contain at least part of the new lower raw material powder layer produced by one of the powder application devices or, in other words, at least part of the second region of the build area as defined above.

The powder application devices may generally be configured according to known solutions and e.g. be adapted to receive raw material powder from dedicated powder refill devices. For example, said refill devices may be stationary and the powder application devices may be moved above or below the refill devices in predefined intervals to receive new powder material therefrom. According to a further known concept, the powder application devices may be configured to receive raw material powder by way of dedicated supply lines and/or nozzles so that raw material powder can be directly injected into the devices.

The irradiation device is further configured to irradiate a section of the build area between the powder application devices. Said section may correspond to the enclosed section or second region of the build area discussed above and may thus include at least part of the lower one of the new raw material powder layers being simultaneously deposited. The irradiation may further take place in parallel to at least one of the powder application devices depositing its raw material powder onto the build area and, preferably, in parallel to the simultaneous deposition by both these devices. Overall, the deposition of raw material powder and the irradiation thereof can thus at least partially take place in parallel.

In essence, the inventors have thus discovered a novel way of increasing the productivity of a respective apparatus by, for one and the same build area, simultaneously carrying out operations relating to secondary processing (e.g., the formation of new raw material powder layers) and operations relating to primary processing (e.g, irradiating and thereby site-selectively solidifying a raw material powder layer or, in other words, processing said layer). Specifically, a first lower raw material powder layer can be processed by the irradiating device while in parallel forming the subsequent upper raw material powder layer on top thereof. Of course, this may include that only those sections of the first lower material powder layer that have already been irradiated/processed are covered by a respective subsequent upper raw material layer. Overall, this means that after having completed processing a raw material powder layer, at least part of the subsequent (upper) raw material powder layer has already been formed thereon by means of the simultaneously operating the further powder application device. Therefore, the irradiating device may continue with the production of a subsequent workpiece layer without substantive interruptions.

According to a preferred embodiment, the powder application devices are configured to move relative to the build area in a spaced apart configuration from one another. Preferably, the build area and/or the carrier as a whole are configured to be non-movable at least in the plane of the build area (e.g. may at most be vertically displaceable but not horizontally). Also, the powder application devices may be configured to perform said relative movement along or across the build area, e.g. by moving between two opposite edge regions thereof. Preferably, this relative movement takes place along a substantially straight or continuously curved course. Overall, the powder application devices move along or across the build area one behind the other and at a varying distance to one another. Note that the respective movement of the powder application devices relative to and in particular along or across the build area may also take place at a distance thereto, i.e., at a different height level with respect to the carrier and without physically contacting it. As evident from above, the spacing apart thus relates in particular to spaces being present in a movement direction and/or along the movement path of the powder application devices across the build area. Additionally or alternatively, spaces between said devices may also be provided along a height axis of the apparatus which extends at an angle to the build area (also called build axis).

In general, the powder application devices may be configured to substantially continuously deposit raw material powder while moving along said build area (e.g. when being configured with an integrated powder storage as previously discussed). Also, they may be configured to adjust the amount of deposited raw material powder based on a current movement parameter, such as their speed. Still further, they may be moved along the build area in a continuous manner at a constant or varying speed or in discrete steps, for example, depending on a layer formation and/or irradiation state of a preceding layer. Note that the term preceding may in the present context relate to one powder application device preceding the other preceding when viewed in the movement direction and/or a sequence of being moved in said direction. Likewise, this term may relate to the sequence of layers formed by the powder application devices with e.g. the lowermost layer forming a first layer, thus preceding each of the following ones.

The irradiation device is further configured to irradiate the section between the powder application devices before the deposition of a lower one of the raw material powder layers has been completed. The term completion may in this case relate to forming the raw material powder layer so as to cover the whole of the build area (in particular with a predetermined thickness). As previously explained, this may also include depositing the raw material onto workpiece or raw material layers being already present on the carrier (i.e., the deposited raw material not directly contacting the carrier), said deposited raw material still extending along or in parallel to a certain surface area of the carrier, thereby covering the build area. Also, the irradiation device may be configured to commence irradiating said lower layer at the same time and/or prior to said upper layer being formed to then, preferably, continue the irradiation during simultaneous powder deposition.

Thus, the irradiation may generally start before both of the powder application devices simultaneously deposit raw material powder onto the build area (e.g. after only the first device has started to deposit raw material powder and the second one remains in a non-depositing waiting position outside the build area). Yet, it is preferably contemplated that during the course of powder deposition, said devices at least temporarily confine a section of the build area between them which may then be irradiated.

In a further aspect, the powder application devices are configured to move at a constant speed and, in particular, a constant relative speed to one another. This may be valid at least temporarily, e.g. during at least part or for the whole period of simultaneous raw material powder deposition onto the build area. The respective speed values may be preset or be determined based on given or observed processing and/or workpiece parameters. The speed values may also set to be constant for the production of the complete workpiece or at least for a predetermined number of raw material powder layers. Moreover, the relative speed may be set to approximately zero, such that the size of the section of the build area between the powder application devices can be kept substantially constant.

Note that it is generally possible to move the powder application devices synchronously (e.g. by means of the constant relative speed discussed above) or asynchronously (e.g. by means of a varying relative speed or generally controlling the movement of the powder application devices independently of one another, e.g. with help of individual drive units).

According to one variant, the movement of at least one of the powder application devices is controlled based on an irradiation parameter of a preceding raw material powder layer. Said irradiation parameter comprises an irradiation scope and/or irradiation progress of a preceding raw material powder layer. The irradiation scope may relate to the scope of the irradiation that is required for processing said preceding layer, for example, the number of sites having to be irradiated or the surface area of the workpiece layer to be produced from said raw material powder layer. This information may be pre-stored, in particular for a given build height and/or the specific of raw material powder layer being currently produced by the powder application device. Also, it may be derived during ongoing production or in preparation from processing and/or workpiece parameters that are e.g. derived from CAD-data. Similarly, the irradiation progress may relate to the share of sites or the workpiece surface area having already been irradiated/processed for said preceding layer. Again, this information can be derived during production, e.g. from observing and/or recording the operation of the irradiating device, or in preparation thereof, e.g. from CAD-data.

In general, if it is determined that the preceding layer requires a large irradiation scope or that the irradiation progress is (or can expected to be) slow, the movement of the powder application device can be slowed down as well. On the other hand, if only a reduced irradiation scope or a fast progress is observed or expected, the movement speed can be increased accordingly.

Note that the preceding layer may be formed by a raw material powder layer directly preceding the layer which is produced by the respective powder application device (i.e., the layer on which said powder application device deposits further raw material powder). Yet, said preceding layer may also be formed by any other preceding layer which has not yet been fully irradiated and processed.

According to a further embodiment, the height position of the powder application devices is adjustable with respect to the build area. The height may generally relate to a position along a height axis which extends at an angle to the carrier and build area and, preferably, substantially perpendicular thereto. Accordingly, the height axis may define a vertical and/or build axis of the apparatus. Furthermore, the powder application devices may be configured to be movable along said height axis and, preferably, the height level of each powder application device can be individually adjusted. Note that in this context, the carrier can be fixed at a predetermined height and the required movements for producing the layer-type configuration of the workpiece may be carried out by the powder application devices. Alternatively, the carrier may be movable, for example, vertically downwards along the height axis. In this case, the powder application devices may be configured to follow said carrier movement but, preferably, are also movable along the height axis independently thereof.

In general, the height adjustment of the powder application devices may be carried out individually and also independently of one another. For example, in case an error is detected (e.g. by way of camera sensors) in a preceding raw material powder layer onto which a new layer is currently deposited by a powder application device, the respective device may stop producing its new layer and try to correct the error lying ahead. For example, said device may be lowered to the height level of the erroneous layer and try to smoothen it to eliminate said error. Following that, it can again be lifted and continue depositing its new uppermost layer on top of the now smoothened lower layer.

The irradiation device and/or the radiation beam emitted thereby are further movable based on a movement of at least one of the powder application devices. In other words, a movement of the irradiation device or radiation beam may be controlled in accordance with or in response to a movement of at least one of the powder application devices. To put it differently, the irradiation device and/or the radiation beam may be moved based on a position of the section of the build area that is enclosed by the powder application devices.

In general, the irradiation device and/or the radiation beam can be controlled so as to always being able to irradiate the section of the build area between the powder application devices. For doing so, the irradiation device (and/or radiation beam) may be moved so as to assume predetermined relative positions to said section (e.g., always being positioned substantially opposite thereto and/or being movable along a movement direction of the powder application devices along the build area). Alternatively, the irradiation device may be stationary or only movable by slight amounts and the radiation beam may be moved, for example, by means of a suitable scanner or deflection device. These developments are particularly advantageous in an embodiment in which both powder application devices move along the build area, thus enclosing a section which (figuratively speaking) travels along the build area as well. By moving the irradiation device and/or radiation beam in the above manner, irradiation of said travelling section can be reliably achieved.

The apparatus may generally comprise a plurality of irradiation devices which may either be movable as e.g. discussed above or substantially stationary. Also, the apparatus may comprise both movable and stationary irradiation devices. In case of a plurality of substantially stationary irradiation devices, these may be configured to irradiate a predefined irradiation section of the build area, preferably substantially below them. Also, adjacent irradiation sections of such stationary irradiation devices may overlap to ensure a sufficient irradiation of the build area. In a further aspect, the apparatus further comprises a third powder application device, the first, second and third powder application devices being configured to simultaneously deposit raw material powder onto the same build area in such a manner that they enclose a first and a second section of the build area between them. Specifically, the first section of the build area may be arranged between the first and second powder application devices, whereas the second section of the build area may be arranged between the second and third powder application devices. Moreover, the first, second and third powder application devices may move along the build area in a sequential manner or, to put it differently, one after the other and at a certain distance to one another. In this context, at least during one point of time and/or for a certain predetermined time period or travel distance, the first, second and third powder application devices may simultaneously deposit raw material onto the build area while enclosing said first and second sections thereof. Furthermore, the third powder application device may generally be configured to deposit a raw material powder layer on top of the layer produced by the second powder application device. Thus, according to this embodiment, the build area may include (at least temporarily) a sequence of three raw material layers being formed simultaneously and on top of one another. Again, it is contemplated that at least one and preferably both of said enclosed sections are at least temporarily irradiated. In addition and in particular in parallel thereto, irradiation may also take place outside thereof, e.g. behind the respective first and last powder application device when viewed in a movement direction along the build area. That is, there may generally exist sections of the build area which are not enclosed by two of said powder application devices and said sections may optionally also be irradiated to increase the productivity of the apparatus.

Note that it is generally conceivable to provide an arbitrary plurality of powder application devices, for example, by further including a fourth, fifth or sixth powder application device. Similar to above, these may produce a new layer of raw material powder on top of the directly preceding one. In general, productivity can be improved if (at least temporarily) simultaneously depositing raw material powder onto the build area by at least two of said plurality of powder application devices and, preferably, by at least three or four of said plurality. This means that it is not mandatory that all of said plurality of powder application devices simultaneously apply raw material powder to the build area. Rather, as detailed below, some of said powder application devices may be moved back to a start region of the build area to ensure a cyclic operation while the remaining ones simultaneously operate on said build area. Thus, according to a preferred embodiment, the apparatus may be configured such that at least two powder application devices actively and simultaneously deposit raw material powder onto the build area, whereas a third or any further powder application device may be inactive in terms of depositing raw material powder, e.g. due to being moved back to the start region.

In general, the irradiation device may be configured to sequentially or alternately irradiate both of said first and second section of the build area. Alternatively or in addition, the apparatus may further comprise a second irradiation device with the first irradiation device being configured to irradiate at least said first section of the build area and the second irradiation device being configured to irradiate at least said second section of the build area. Generally, this means that each section between a plurality of powder application devices can be assigned an own irradiation device. Also, at least some of said plurality of irradiation devices and/or the radiation beams generated thereby may be movable in the above described manner, e.g. by moving the irradiation devices along the build area to remain substantially opposite to a respectively assigned enclosed section. Alternatively, the first and second irradiation device may be substantially stationary and, as discussed above, may irradiate preferably overlapping predefined irradiation sections of the build area. In this case, one irradiation device can be generally configured to irradiate both of the enclosed first and second section as these travel along the build area and through the respective irradiation sections in accordance with a movement of the powder application devices.

Note that the plurality of irradiation devices may also be connected to a common sintering/melting radiation source, such as a laser. In this case, the irradiation devices may comprise individual optical units for emitting and/or directing a radiation beam onto the build area. Said optical units may be connected to the common irradiation source by means of an optical fibre and/or may comprise a scanner unit for directing the radiation beam to selected sites of the build area.

The powder application devices may further be configured to move from a start region to an end region of the build area while producing raw material powder layers, wherein after having reached the end region, the powder application devices are configured to move back to the start region. This way, a substantially cyclic operation of the apparatus and, in particular, cyclic formation process of raw material powder layers can be achieved. In other words, after having moved from the start to the end region and, preferably, continuously depositing raw material powder during said movement, the formation of a respective raw material powder layer may have been completed. Consequently, the powder application devices may be moved back to their start regions (preferably in a non-depositing state and/or remote from the build area) to commence forming a new raw material powder layer which may result in an overall cyclic operation.

Note that during a respective cyclic operation, it may generally be contemplated to control the movement of a plurality of powder application devices, such that substantially always at least two of them operate on the build area. This is particularly relevant if providing at least three powder application devices which allows for always keeping at least two powder application devices simultaneously on the build area even while moving a third one back to the start region.

In this context, a height position of the powder application devices and/or the build area may be adjustable in such a manner that after being re-arranged in the start region, the powder application devices can deposit a further raw material powder layer on top of the uppermost one of said sequence of layers. Said uppermost layer typically corresponds to the one whose formation has most recently been started by one of the powder application devices.

Accordingly, the height position of the re-arranged/moved-back powder application device can be adjusted prior to forming a new raw material powder layer. In particular, the powder application devices can be lifted relative to the build area (e.g., by moving upwards along the height axis and the build area remaining stationary or moving downwards). The total amount of relative height adjustment may correspond to the sum of the thicknesses of the raw material powder layers whose production has at least been started in the meantime, preferably including the just finished layer by the respective moved-back powder application device. Accordingly, the total relative height adjustment amount may correspond to the thickness of the own layer having been produced by said powder application device during the previous movement along the build area and the thicknesses of the layers that have at least partially been produced by the respective other devices in parallel thereto. This also applies in case of an arbitrary plurality of powder application devices, wherein prior to starting a further movement of a powder application device along the build area, the height position of said powder application device and/or the build area can to be adjusted with regard to the raw material powder layers having been or being currently added compared to a previous movement cycle of said device. Note that the exact point of time for performing said height adjustment is arbitrary but is preferably carried with the powder application devices being positioned in or adjacent to the start region.

After having reached the end region, the powder application devices may further be movable relative to the build area according to at least one of the following: adjusting their relative height to the build area; moving sideways with respect to the build area; and moving along a substantially circular path. The relative height adjustment may in particular be performed so that the powder application devices are above or below a currently produced raw material powder layer and/or above or below any further powder application devices being positioned on the build area.

In this context, the movement of the powder application devices may comprise at least a respective height-adjusting (e.g., vertical) and/or sideways vectorial component without strictly having to take place in a respective direction. The term sideways may generally relate to a movement in a plane parallel to or including the build area but pointing away therefrom (e.g. extending at an angle to a movement direction of the powder application devices along said build area). After having been moved accordingly, the powder application devices may carry out a movement back to the start region as discussed above. This may take place along a substantially parallel movement axis compared to the just completed layer depositing movement along the build area. Close to the start region, the powder application devices may then carry out an oppositely directed movement compared to the sideways and/or height-adjusting movement at the end region to again reach the start region (i.e., performing an overall loop- or cycle-type movement). Overall, this may result in a loop-type movement along a circular path. Said circular path may be defined in or by a plane extending substantially transverse and preferably orthogonally to the build area or by a plane extending substantially in parallel to the build area. In the latter case, the powder application devices may rotate about a central rotational axis which is remote from the build area as well as the single powder application devices (e.g. by said axis being located substantially in a center of the circular path).

Generally, each powder application device may comprise or be connectable to an individual drive and/or guide system for carrying out the respective movements. According to one embodiment, at least one of the powder application devices is guided along and endless track connecting the start region and end region. Such endless tracks are known e.g. from moving mold tunnels for pipe production or guiding single steps of escalators.

In this connection, at least one of and preferably each of the powder application devices can be guided along the build area by means of a first track section in an active powder depositing state and can be guided back to the start region along a second track section in an inactive non-depositing state. The first and second track sections may be connected by rounded or angled intermediate sections and, preferably, run substantially in parallel to one another. Note that each of the powder application devices may be connected to a common drive system, such as a driven chain running around the endless track. Alternatively, the powder application devices may comprise independent drive systems, such as driven rollers, which are guided by said endless track.

According to a further embodiment, the powder application devices are configured to rotate about a common rotational axis, said axis extending at an angle to the build area. Preferably, the rotational axis extends substantially perpendicularly to said build area. Also, the rotational axis may intersect said build area (i.e., not being remotely arranged therefrom). The powder application devices may be height-adjustable relative to the build area by being moved along said rotational axis. For doing so, a central member may be provided to which the powder application devices are connected and, preferably, are guided for a respective height-adjusting movement along a longitudinal axis of said central member. The powder application devices may be connected to said central member at one of their edge regions and the central member may comprise an elongated cylindrical body. This may result in an overall paddle wheel type configuration being arranged above, on top of or generally opposite to the build area.

In this connection, the central member may rotate the powder application devices relative to the carrier over an angular range of 360_{°} (i.e., a full rotation corresponding to a movement from 0_{°} to 360_{°}, following which a further rotation in the same direction is started from 0_{°}). Again, at least one build area may be provided on said carrier and e.g. extend along a range of ca. 120_{°} (e.g. extend between the 30_{°} and 150_{°} of said angular range). In one development, two build areas are provided which, preferably, cover an equivalent angular range and/or are spaced apart by equivalent angular amounts on said carrier (for example, the build areas each covering angular ranges of 120° and being spaced apart by non-build areas with a range of 60°).

Regarding said rotationally driven embodiment, the powder application devices may assume different height positions during a rotation, such that when moved along the build area, a (when viewed in the rotational movement direction) first powder application device produces a lower first raw material powder layer and a second (higher) powder application device produces a second raw material powder layer on top of the first one.

Note that in this context the powder application devices may again be provided with own powder storages for depositing raw material powder when being moved along the build area (cf. EP 2 818 305 A1 discussed above). Additionally or alternatively, a separate and preferably stationary powder storage may be provided above an area of the carrier that is preferably not used as a build area. This way, powder may be selectively released and discharged onto the carrier to then being pushed by an approaching powder application device onto an adjacent build area and distributed thereon so as to form a new raw material powder layer. For doing so, the powder distribution device may comprise a suitable lip or blade structure facing the build area.

Furthermore, with regard to said rotationally driven embodiment, the irradiation device and/or the radiation beam emitted thereby may again be movable, e.g. in accordance with at least one of the powder application devices, so as to reliably irradiate sections of the build area between said application devices.

In addition, if having been rotated from an end region back to a start region of one and the same build area, the height position of a respective powder application device may, similar to above, again be adjusted in view of the meanwhile added raw material powder layers. This may be achieved by moving said powder application device along a longitudinal axis of the central member, said longitudinal axis typically coinciding with the rotational axis.

The invention further relates to a method for operating an apparatus for producing a three-dimensional workpiece, the apparatus comprising: a carrier for receiving a raw material powder, at least a first irradiation device for selectively irradiating an electromagnetic or particle radiation beam onto raw material powder being deposited on at least one build area of the carrier in order to produce a workpiece made of said raw material powder by an additive layer construction method, and at least a first and a second powder application device. The method comprises the steps of operating the first and a second powder application devices so as to simultaneously deposit raw material powder onto the same build area to produce a sequence of raw material layers on top of one another; and irradiating a section of the build area between the powder application devices.

Again, said simultaneous deposition may be provided at least temporarily and/or over a predetermined time period or travel distance of the powder application devices.

Also, the irradiation of the enclosed section of the build area may take place at least partially in parallel to said simultaneous deposition. Furthermore, the method according to the present invention may generally involve any additional step to provide any of the functions and effects as well as realise any of the operating states and control activities of the above discussed apparatus and, in particular, carry out any of the movements of the powder application devices described above. This applies to possible movements of the irradiating device(s) and/or the radiation beam(s) which are included as respective steps in the present method. Note that again, irradiation may also start before both of the powder application devices simultaneously deposit raw material powder onto the build area (e.g. after only the first device has started to deposit raw material powder and the second one remains in a non-depositing waiting position outside the build area). Yet, the method contemplates that during the course of powder deposition, said devices may at least temporarily confine a section of the build area between them which may then be irradiated.

Preferred embodiments of the invention are explained in greater detail below with reference to the accompanying schematic drawings, in which:
- Figures 1a-1e: illustrate an operational sequence of an apparatus according to a first embodiment; and
- Figures 2, 3: illustrate examples of endless track systems for ensuring a cyclic operation of an apparatus similar to the first embodiment.

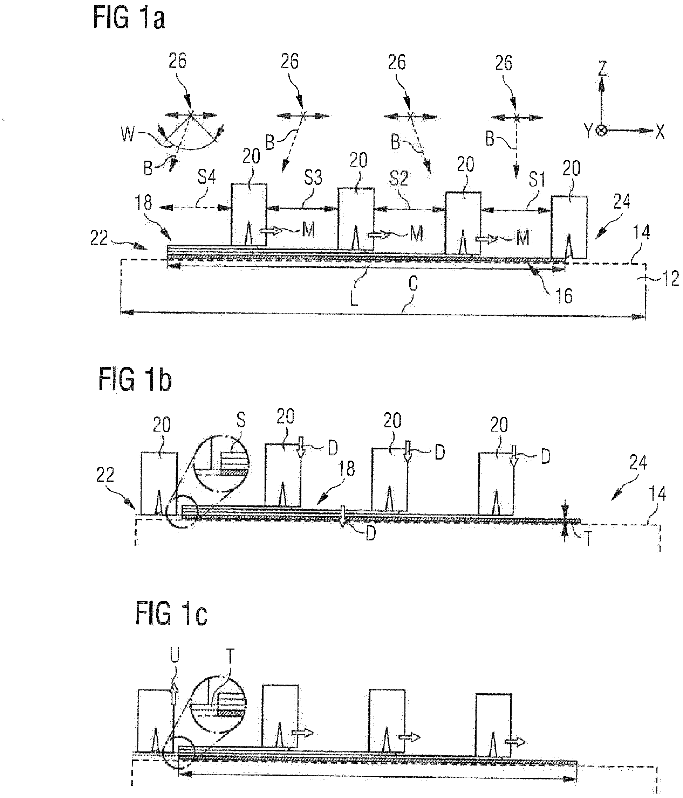

In figure 1a, an apparatus 10 according to a first embodiment is schematically illustrated and generally displayed from a sideview perspective. The apparatus 10 comprises a carrier 12 having an upper planar rectangular surface 14. A fraction of said surface 14 having a length L represents a designated build area 16 on which raw material powder 18 is to be deposited. From said raw material powder 18, a workpiece will be eventually formed according to an as such known selective laser melting method.

Note that the length L of the build area 16 is smaller than an overall length C of the planar surface 14 of the carrier 12 but may also be equal thereto. In addition, a non-illustrated depth of the build area 16 along the Y-axis is equal to the depth of said carrier 12 but may also be smaller than said depth of the carrier 12, e.g. depending on the size and/or number of layers of the workpiece to be produced. Further known structures are omitted in this figure, such as sidewalls for supporting the deposited raw material powder 18 so as to maintain the depicted overall rectangular block-type shape.

The apparatus 10 comprises four powder application devices 20 which are generally configured according to known examples. Specifically, the powder application devices 20 comprise integrated powder storages for directly discharging powder onto the build area 16. Yet, as previously discussed, it is equally conceivable that the powder application devices 20 distribute separately discharged raw material powder on the build area, thereby depositing the powder on said build area to from a new layer. As indicated in figure 1a by arrows M, said powder application devices 20 move along the length L of the build area 16 and thus along an X- or horizontal axis of the apparatus 10. Specifically, the powder application devices 20 move from a (left) start region 22 to a (right) end region 24 in a straight movement along the X-axis. During this movement, they continuously deposit raw material powder 18 above and thus onto the build area 16, thereby forming raw material powder layers with an equal thickness T on top of one another (cf. thickness T in Fig. 1b).

As can be further gathered from figure 1a, the powder application devices 20 are generally arranged at different height positions along the Z- or vertical axis of the apparatus 10 (also referred to as build axis). Specifically, a rightmost powder application device 20 in figure 1a (or, to put it differently, the powder application device 20 having been moved over the largest distance in the movement direction M) represents the lowest powder application device 20 along the height axis Z. The height positions of the preceding powder application devices continuously increase from one to the other when viewed against the movement direction M. Consequently, the leftmost powder application device 20 in figure 1a or, in other words, the least moved powder application device 20 in the movement direction M assumes the highest position. Overall, the powder application devices 20 are thus spaced apart along the height axis Z from a directly adjacent one by a distance equivalent to the layer thickness T.

As further evident from figure 1a, the powder application devices 20 are also spaced apart from one another along the X-axis. In the present example, this is achieved by moving each of the powder application devices 20 with the same speed in the movement direction M, whereas the points of time for starting said movement from the start region 22 are different from one another. In more detail, the movement of the rightmost powder application device 20 of figure 1a is started first, to then sequentially and after predetermined time intervals start the movements of the subsequent powder application devices 20.

In sum, this spaced apart movement along the build area 16 while being distributed along the height axis Z leads to all four powder application devices 20 simultaneously depositing raw material powder 18 onto the build area 16, with each of the powder application devices 20 depositing its raw material powder 18 onto the raw material powder 18 of a directly preceding device 20. This results in the step-type raw material powder layer formation depicted in figure 1a.

Note that in said figure, the apparatus 10 has already been operating for some time. At a non-illustrated start of the operation, all powder application devices 20 are lined up one behind the other in the start region 22 (so-called waiting position). Following that, the movement of the rightmost powder application device 20 of figure 1a (or generally the powder application device 20 being arranged closest to the build area 16 in the waiting position) is started first. Said powder application device 20 then forms a first and lowermost layer of raw material powder 18 directly onto the carrier 14 while moving to the end region 24 (note that for illustration purposes this lowermost area is hatched). Following that, the subsequent powder application device 20 forms a raw material powder layer on top of the layer formed by said preceding powder application device 20. The term preceding relates in this context to the position of the powder application devices 20 along the movement direction M as well as the sequence of being moved in said direction. Likewise, this term relates to the sequence of layers formed by the powder application devices 20 with the lowermost layer forming a first layer, thus preceding each of the subsequent ones.

By doing so, the depicted sequence of raw material powder layers is formed. In figure 1a, only the rightmost powder application device 20 has completed forming its raw material powder layer by having reached the end region 24. As will be evident from the following figures, the remaining powder application devices equally move to said end region 24, so that the produced sequence of raw material powder layers is generally congruent with the build area 16 and continuously increases with regard to its height.

In the following, the irradiation of the raw material powder layers for producing single workpiece layers therefrom will be discussed. As marked figure 1a, when simultaneously moving along the build area 16, the powder application devices 20 enclose sections S1-S4 of the build area 16 between each other. Said sections S1-S4 are generally rectangularly shaped and are enclosed by two adjacent powder application devices 20 along their opposite longer sides which extend in the Y-direction. Due to the movement of the powder application devices 20 along the build area 16, said sections S1-S4 will (figuratively speaking) move along said build area 16 in the movement direction M as well.

Note that in the state depicted in figure 1a, no subsequent powder application device 20 is present for the leftmost powder application device 20. Yet, as detailed below, the rightmost powder application device 20 which has already reached the end region 24 will be moved back to the start region 22 to ensure a cyclic layer forming operation. Thus, a section S4 which will be enclosed by the respective powder application devices 20 as soon as said moving back to the start region 22 has been completed is already indicated by a dashed arrow.

The apparatus 10 comprises four irradiation devices 26 which each are assigned to and are provided for irradiating one of the enclosed sections S1-S4. The irradiation devices 26 are as such configured in a well-known manner and each emit a laser beam B to site-selectively melt the raw material powder 18 of an uppermost and externally exposed layer in the respective sections S1-S4.

In present example, the irradiation devices 26 are configured to be movable along the X-axis and along the complete length X of the carrier 14 (cf. respective arrows in figure 1a). Furthermore, they are spaced apart from one another along the Y-axis so that they can move past each other without collision. Hence, they can follow the movements of the powder application devices 20 and the enclosed sections S1-S4 to which they are individually assigned.

In more detail, the irradiation devices 26 are movable at a constant speed which is equivalent to the speed of the powder application devices 20 and can thus always be arranged substantially opposite to a respective section S1-S4 enclosed by said devices 20. At the same time, the irradiation devices 26 comprise scanner units for deflecting the emitted beams B about the Y- and X-axes so as to irradiate any desired site within an associated section S1-S4. This way, selective laser melting of the raw material powder 18 in said sections S1-S4 can be performed. The movability of the beams B is schematically indicated in figure 1a by a respective angle W for one of the irradiation devices 26.

In sum, this also means that each irradiation device 26 irradiates a raw material powder layer produced by a (when viewed in the movement direction M) directly preceding powder application device 20. More precisely, the rightmost irradiation device 26 irradiates section S1 containing the raw material powder layer formed by the rightmost powder application device 20. Likewise, the (when viewed in the movement direction M) second to last irradiation device 26 irradiates section S2 containing the raw material powder layer formed by the penultimate powder application device 20, and so on.

Moreover, in the present example, the movements of the irradiation devices 26 and the powder application devices 20 are controlled so as to always ensure that a region of a preceding lower raw material layer has already been irradiated prior to a subsequent upper raw material powder layer being newly deposited thereon. For example, if starting the production from the non-illustrated waiting position discussed above, the rightmost powder application device 20 of figure 1a will be moved in the movement direction M and deposit a lowermost raw material powder layer directly onto the carrier 14 in the region of the build area 16. The associated rightmost irradiation device 26 will be arranged close to the start region 22 and start to immediately irradiate said layer. This is achieved by a coordinated movement of said irradiation device 26 as a whole in the movement direction M while at the same time deflecting the radiation beam B appropriately. Only after at least a first portion of said lowermost raw material powder layer starting from the start region 22 has already been irradiated, does the subsequent powder application device 20 start its movement along the build area 16. Consequently, a further raw material powder layer is only deposited on top of those regions of the preceding lower layer which have already been irradiated. Likewise, in case of figure 1a, the leftmost irradiation device 26 has already starting irradiating the layer formed by the leftmost powder application device 20, so that a new raw material powder layer can be deposited thereon.

Note that as an alternative to the given example, the irradiation devices 26 may also be stationary and each irradiate an enclosed section S1-S4 of the build area 16 which is arranged substantially directly below them. Thus, each irradiation device 26 may be configured to irradiate a predefined irradiation section of the build area 16, wherein adjacent irradiation sections may overlap to ensure that the complete build area 16 can be reliably irradiated. In this case, a respective section S1-S4 will be subsequently irradiated by each of the irradiation devices 26 as the enclosing powder application devices 20 move along the build area 16. In other words, the irradiation of the sections S1-S4 will be passed on from one irradiation device 26 to the next as said sections S1-S4 travel along the build area 16 and through the individual irradiation sections of the irradiation devices 20. In this context, a movability/deflectability of the emitted beams by way of known scanner units may be particularly advantageous.

In general, irradiation may be temporarily interrupted if a respective powder application device 20 passes below a (stationary or movable) irradiation device 26 to avoid unintended irradiations of the powder application device 20 as such. For example, irradiation may be suppressed if a powder application device 20 is arranged substantially directly below or opposite to an irradiation device 26. In general, the powder application devices 20 may move substantially continuously along the build area 16 or in a stepwise manner, e.g. by briefly interrupting their movement when passing from one irradiation section to an adjacent one in case of a plurality of stationary irradiation devices 26.

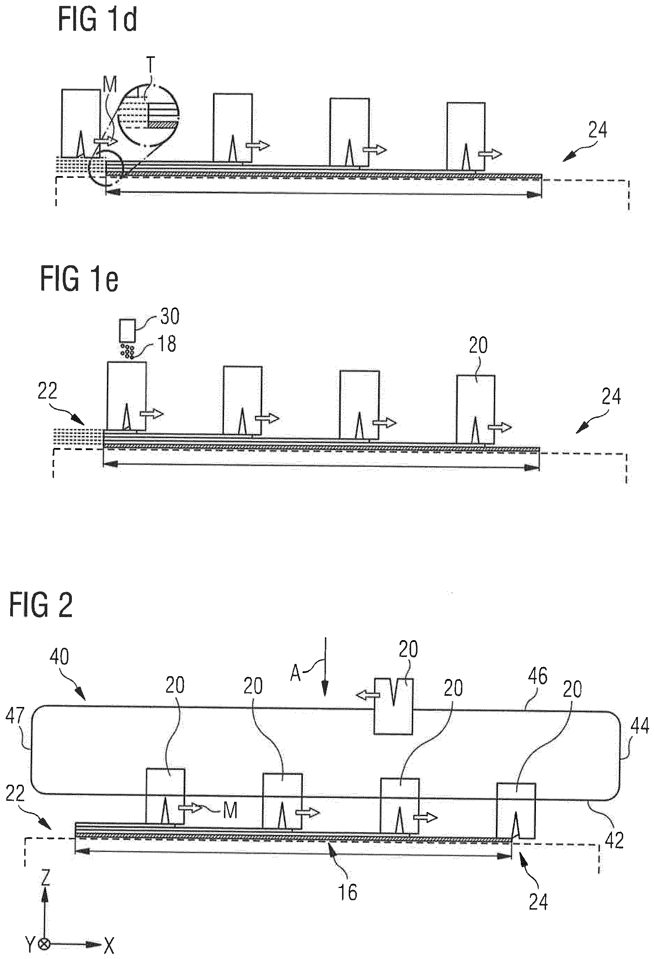

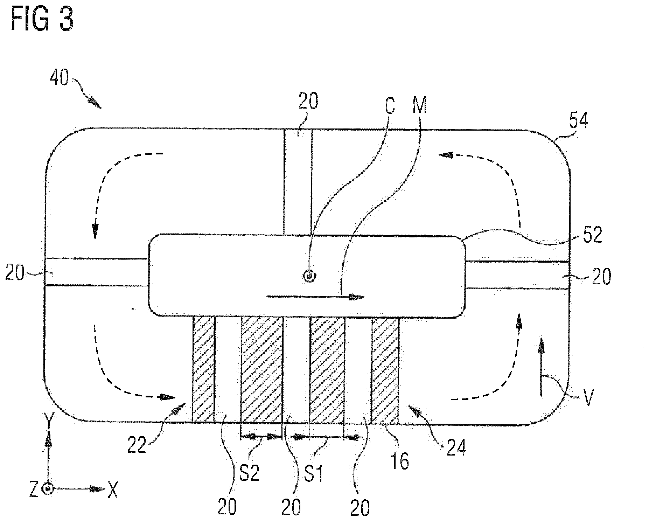

Referring to figures 1b to 1e in the following, a cyclic operation of the apparatus 10 and in particular the cyclic formation of raw material powder layers will be described. As previously discussed, in the state shown in figure 1a the rightmost powder application device 20 completed forming its raw material powder layer and has reached the end region 24. Following that, this powder application device 20 moves back to the start region 22 and assumes the position illustrated in figure 1b (e.g. by way of an endless track system as discussed below with respect to figures 2 and 3).

As shown in figure 1b, when again reaching the start region 22, the moved-back powder application device 20 assumes the same height position as in the end region 24 (i.e., the same height position as in figure 1a for producing a lowermost raw material powder layer). Yet, since in the meantime the remaining three powder application devices 20 have already started depositing their respective further layers onto build area 16, the moved-back powder application device 20 needs to be lifted along the height axis Z so as to reach an uppermost external surface S of the deposited raw material 18 (cf. partially enlarged view in figure 1b).

First of all, however, the carrier 14 as a whole is moved vertically downwards along the height axis Z by the amount of a single layer thickness T (note: in the present example, each raw material powder layer is formed with the same thickness T on the build area 16). At the same time, each of the powder application devices 20 which currently deposits raw material powder 18 onto said build area 16 is equally moved vertically downwards by the same amount. This is correspondingly indicated in figure 1b by arrows D.

As shown in figure 1c, the moved-back powder application device 20 is thus lifted upwards relative to the build area 16 and the raw material powder layers deposited thereon by the same amount of one layer thickness T (cf. arrow U and partially in enlarged view in figure 1c).

As obvious from the partially enlarged view in figure 1d, the still required height adjustment of the moved-back powder application device 20 thus amounts to the added thicknesses of each of the raw material powder layers which have at least partially been produced in the meantime. Thus, the moved-back powder application device 20 has to be moved further upwards relative to the build area 16 by an amount of three times the layer thickness T. In total, the relative height adjustment between the moved-back powder application device 20 and the build area 16 hence amounts to four times the layer thickness T.

As shown in figure 1d, the moved-back powder application device 20 is thus arranged above the uppermost raw material powder layer whose formation has most recently been started and is spaced apart therefrom by the amount of one layer thickness T. Accordingly, when being moved again towards the end region 24 in the movement direction M, said powder application device 20 can deposit a new uppermost raw material powder layer on top of the in the meantime deposited layers.

Note that in parallel to moving the respective powder application device 20 back to the start region 22, the rightmost irradiation device 26 is also moved back to said start region 22 to commence irradiating the newly formed uppermost raw material powder layer (not illustrated). Since the irradiation devices 26 are spaced apart from one another along the Y-axis, this movement may take place along a linear guide rail extending along the X-axis without collision with any of the further irradiation devices 26.

Finally, figure 1e shows a state in which the moved-back powder application device 20 has already started forming the new uppermost raw material powder layer. Simultaneously, said powder application device 20 is refilled with raw material powder 18 from a stationary powder refill device 30 to ensure a cyclic operation without interruptions.

For the sake of completeness, it is noted that the now rightmost powder application device 20 in figure 1e is next to be moved from the end region 24 back to the start region 22 and perform a height adjustment according to figures 1b to 1d to then produce a new uppermost raw material powder layer. Overall, this results in a cyclic operation and a continuous increase of total height of the raw material powder 18 deposited onto the build area 16 as well as the single workpiece layers produced therefrom.

Note that it is also possible to delay the downward movements according to arrows D in figure 1b, e.g. by a predetermined number of layer depositing cycles. For example, moving the carrier 14 and/or the currently depositing powder application devices 20 downwards can be postponed until a predefined plurality of new uppermost powder layers have been (preferably completely) formed. Similarly, the step according to figure 1b can be carried out only after a plurality of powder application devices 20 have already been moved back to the start region 22 and/or have begun producing new uppermost raw material powder layers. In any case, the amount of the height adjustment prior to forming a new layer may have to be adapted accordingly. For example, in case of no downward movement D in figure 1b, the leftmost powder application device 20 has to be lifted by an amount of four times the layer thickness T to again form a new uppermost raw material powder layer on the carrier 14.

Overall, the vertical downwards movement D of figure 1b may thus be carried out after preferably each of the powder application devices 20 of figures 1a-e have completed depositing at least one raw material powder layer (i.e., after preferably at least four layers have been produced), to then perform the previously discussed further measures of figures 1b-e. In between, the powder application devices 20 and the irradiation devices 26 may operate in the above-discussed manner, e.g. by simultaneously enclosing and irradiating a plurality of sections S1-S4 of the build area 16 and the powder application devices 20 being lifted upwards by a suitable amount before producing a new uppermost layer. This way, disturbances and shocks due to frequent downward movements of the carrier 14 can be limited.

In other words, the present solution generally contemplates that for a certain number of cycles, only the powder application device 20 that is next to produce the uppermost layer is moved upwards. After the predetermined number of cycles has been reached, the whole carrier 14 and/or the powder application devices 20 located thereon may be moved downwards as discussed with reference to Fig. 1b.

Figures 2 and 3 show schematic examples for realizing the cyclic movements between the start and end regions 22,24 of the powder application devices 20 by means of endless track systems 40. Note that the exact numbers and positions of the powder application devices 20 are only illustrated by way of example in these figures.

In figure 2, a similar view from a sideways perspective as in case of figures 1a-e is shown and, specifically, an operation state similar to figure 1a. One can see that each of the powder application devices 20 is connected to an endless track system 40 and guided along generally elongated track sections thereof. Moreover, each of the powder application devices 20 is movable transverse to said track sections so as to perform the previously discussed height adjustments relative to the build area 16. Specifically, the four powder application devices 20 which currently operate on the build area 16 are guided along a first track section 42 extending in parallel to the X-axis so as to move in the movement direction M. After having reached the end region 24, the powder application devices 20 will stop discharging raw material powder 18 and continue their movement in the same direction. Consequently, they will be guided vertically upwards by a first intermediate track connecting section 44 and then in an upside down configuration along a second track section 46 back towards the start region 22. In this state, they again move in parallel and along to the X-axis but opposite to the movement direction M for moving along the build area 16. Near the start region 22, the powder application devices 20 are guided back and properly reoriented by a second track connecting section 47, so as to form a new uppermost raw material powder layer onto the build area 16.

In figure 3, a similar endless track system 44 is shown, however, from a top view perspective according to arrow A of figure 2 (cf. respectively re-oriented coordinate system in figure 3). Again, a build area 16 is shown onto which in the current state three powder application devices 20 simultaneously deposit raw material powder 18 (note: for purposes of clarity, the build area 16 is hatched in this figure). Consequently, two sections S1-S2 of the build area 16 are currently enclosed between said powder application devices 20. Moreover, three further powder application devices 20 are shown which are currently in the process of moving back from the end region 24 to the start region 22. In this example, the endless track system 40 comprises an inner and outer track 52, 54 between which each of the powder application devices 20 is guided. Said inner and outer tracks 52, 54 extend in a plane which is parallel to the build area 16. Again, each of the powder application devices 20 is furthermore movable transverse to said inner and outer tracks 52, 54 and thus adjustable with regard to their height position along the Z-axis. Moreover, a cyclic operation is ensured by guiding the powder application devices 20 in a circle from an end region 24 and back to the start region 22. In this case, the movement of the powder application devices 20 contains a sideways vectorial component with respect to the build area 16 as indicated by arrow V in figure 3. Said sideways component V extends in the plane of the build area but points away therefrom. More precisely, in the depicted case, it extends along the Y-axis and thus at an (preferably orthogonal) angle to the movement direction M.

Note that as a further development to the embodiment of figure 3, further build areas 16 could be included along the movement path of the powder application devices 20 back to the start region 22. For example, a second build area 16 could be included along the opposite non-curved section of the guide tracks 52, 54 in figure 3 (i.e., in the area of the uppermost powder application device 20 in figure 3). Also, as an alternative to the curved portions of said guide tracks 52, 54 which define the sideways movement V, the powder application devices 20 could also be moved in a linear manner. This may include a separate track system to then again be connected to the straight portions of the inner and outer tracks 52, 54. Overall, this may result in a spaced apart sideways movement of the powder application devices 20 to reach opposite portions of the inner and outer tracks 52, 54, for example, to then again perform the desired movement M along the build area 16.

In general, the powder application devices 20 of Fig. 2 are thus moved by way of a height adjustment and are further moved along a circular path defined by the track system 40, said circular path extending in a plane which is orthogonal to the build area 16. In case of Fig 3, the powder application devices 20 are moved sideways with respect to the build area 16 and likewise follow a circular path defined by tracks 52, 54 extending in a plane that is parallel to the build area 16. The powder application devices 20 hence rotate about a common central axis C remote from the build area 16 and powder application devices 20 and around which the tracks 52, 54 run. Said axis C further extends orthogonally relative to the build area 16.

## Claims

1. An apparatus (10) for producing a three-dimensional workpiece, the apparatus (10) comprising:
- a carrier (14) for receiving a raw material powder (18),
- at least a first irradiation device (26) for selectively irradiating an electromagnetic or particle radiation beam (B) onto raw material powder (18) being deposited on at least one build area (16) of the carrier (14) in order to produce a workpiece made of said raw material powder (18) by an additive layer construction method, and
- at least a first and a second powder application device (20) being configured to simultaneously deposit raw material powder (18) onto the same build area (16) to produce a sequence of raw material powder layers on top of one another,
wherein
the irradiation device (26) is configured to irradiate a section (S1-S4) of the build area (16) between the powder application devices (20);
the build area (16) defines a maximum possible footprint of the workpiece;
the irradiation device (26) and/or the radiation beam (B) emitted thereby are movable based on a movement of at least one of the powder application devices (20); and
the powder application devices (20) are configured to move along or across the build area (16) one behind the other and at a varying distance to one another,
wherein the irradiation device (26) is configured to irradiate the section (S1-S4) between the powder application devices (20) before the deposition of a lower one of the raw material powder layers has been completed.

2. The apparatus (10) according to claim 1,
wherein the powder application devices (20) are configured to move relative to the build area (16) in a spaced apart configuration from one another.

3. The apparatus (10) according to one of the preceding claims,
wherein the movement of at least one of the powder application devices (20) is controlled based on an irradiation parameter of a preceding raw material powder layer, said irradiation parameter comprising an irradiation scope and/or irradiation progress of the preceding raw material powder layer.

4. The apparatus (10) according to one of the preceding claims,
the height position of the powder application devices (20) is adjustable with respect to the build area (16).

5. The apparatus (10) according to one of the preceding claims,
further comprising a third powder application device (20), the first, second and third powder application devices (20) being configured to simultaneously deposit raw material powder (18) onto the same build area (16) in such a manner that they enclose a first and a second section (S1-S4) of the build area (16) between them.

6. The apparatus (10) according to claim 5,
wherein the apparatus (10) further comprises a second irradiation device (26), wherein the first irradiation device (26) is configured to irradiate at least the first section (S1-S4) of the build area (16) and the second irradiation device (26) is configured to irradiate at least the second section (S1-S4) of the build area (16).

7. The apparatus (10) according to one of the preceding claims,
wherein the powder application devices (20) are configured to move from a start region (22) to an end region (24) of the build area (16) while producing said raw material powder layers, wherein after having reached the end region (24), the powder application devices (20) are configured to move back to the start region (22).

8. The apparatus (10) according to claim 7,
wherein the height position of the powder application devices (20) and/or the build area (16) is adjustable in such a manner that after being re-arranged in the start region (22), the powder application devices (20) can deposit a further raw material powder layer on top of the uppermost of said sequence of layers.

9. The apparatus (10) according to claim 7 or 8,
wherein after having reached the end region (24), the powder application devices (20) are movable relative to the build area (16) according to at least one of the following:
- adjusting their relative height to the build area (16);
- moving sideways with respect to the build area (16); and
- moving along a substantially circular path.

10. The apparatus (10) according to one of claims 7 to 9,
wherein at least one of the powder application devices (20) is guided along an endless track (40) connecting the start region (22) and end region (24).

11. The apparatus (10) according to one of the preceding claims,
wherein the powder application devices (20) are configured to rotate about a common rotational axis, said axis extending at an angle to the build area (16).

12. A method for operating an apparatus (10) for producing a three-dimensional workpiece, the apparatus (10) comprising:
- a carrier (14) for receiving a raw material powder (18),
- at least a first irradiation device (26) for selectively irradiating an electromagnetic or particle radiation beam (B) onto raw material powder (18) being deposited on at least one build area (16) of the carrier (14) in order to produce a workpiece made of said raw material powder (18) by an additive layer construction method, and
- at least a first and a second powder application device (20),
the method comprising the steps of:
- operating the first and a second powder application devices (20) so as to simultaneously deposit raw material powder (18) onto the same build area (16) to produce a sequence of raw material layers on top of one another; and
- irradiating a section (S1-S4) of the build area (16) between the powder application devices (20),
wherein the build area (16) defines a maximum possible footprint of the workpiece, and wherein the irradiation device (26) and/or the radiation beam (B) emitted thereby are moved based on a movement of at least one of the powder application devices (20),
wherein the method further comprises moving the powder application devices (20) along or across the build area (16) one behind the other and at a varying distance to one another, and
wherein the section (S1-S4) between the powder application devices (20) is irradiated before the deposition of a lower one of the raw material powder layers has been completed.

## Patentansprüche

1. Vorrichtung (10) zur Herstellung eines dreidimensionalen Werkstücks,
wobei die Vorrichtung (10) umfasst:
- einen Träger (14) zur Aufnahme eines Rohstoffpulvers (18),
- mindestens eine erste Bestrahlungsvorrichtung (26) zur selektiven Bestrahlung eines Rohstoffpulvers (18), das auf zumindest eine Baufläche (16) des Trägers (14) aufgebracht ist, mit einem elektromagnetischen Strahl oder einem Teilchenstrahl (B), um durch ein additives Schichtbauverfahren ein aus dem Rohstoffpulver (18) bestehendes Werkstück herzustellen, und
- mindestens eine erste und eine zweite Pulverauftragsvorrichtung (20), die konfiguriert sind, gleichzeitig Rohstoffpulver (18) auf dieselbe Baufläche (16) aufzubringen, um eine Folge von Rohstoffpulverschichten übereinander zu erzeugen,
wobei
die Bestrahlungsvorrichtung (26) konfiguriert ist, einen Abschnitt (S1-S4) der Baufläche (16) zwischen den Pulverauftragsvorrichtungen (20) zu bestrahlen;
die Baufläche (16) eine maximal mögliche Grundfläche des Werkstücks definiert;
die Bestrahlungsvorrichtung (26) und/oder der von ihr emittierte Bestrahlungsstrahl (B) auf der Basis einer Bewegung von mindestens einer der Pulverauftragsvorrichtungen (20) bewegbar sind; und
die Pulverauftragsvorrichtungen (20) konfiguriert sind, sich hintereinander und in einem variierenden Abstand zueinander entlang der oder über die Baufläche (16) zu bewegen,
wobei die Bestrahlungsvorrichtung (26) konfiguriert ist, den Abschnitt (S1-S4) zwischen den Pulverauftragsvorrichtungen (20) zu bestrahlen, bevor das Aufbringen einer unteren der Rohstoffpulverschichten abgeschlossen ist.

2. Vorrichtung (10) nach Anspruch 1,
wobei die Pulverauftragsvorrichtungen (20) konfiguriert sind, sich relativ zu der Baufläche (16) in einer voneinander beabstandeten Konfiguration bewegen.

3. Die Vorrichtung (10) nach einem der vorangehenden Ansprüche,
wobei die Bewegung von mindestens einer der Pulverauftragsvorrichtungen (20) auf der Basis eines Bestrahlungsparameters einer vorangehenden Rohstoffpulverschicht gesteuert wird, wobei der Bestrahlungsparameter einen Bestrahlungsumfang und/oder einen Bestrahlungsfortschritt der vorangehenden Rohstoffpulverschicht umfasst.

4. Vorrichtung (10) nach einem der vorangehenden Ansprüche,
wobei die Höhenposition der Pulverauftragsvorrichtungen (20) in Bezug auf die Baufläche (16) einstellbar ist.

5. Vorrichtung (10) nach einem der vorangehenden Ansprüche,
die ferner eine dritte Pulverauftragsvorrichtung (20) umfasst, wobei die erste, die zweite und die dritte Pulverauftragsvorrichtung (20) konfiguriert sind, gleichzeitig Rohstoffpulver (18) auf dieselbe Baufläche (16) aufzubringen, so dass sie einen ersten und einen zweiten Abschnitt (S1-S4) der Baufläche (16) zwischen sich einschlie-ßen.

6. Vorrichtung (10) nach Anspruch 5,
wobei die Vorrichtung (10) ferner eine zweite Bestrahlungsvorrichtung (26) umfasst, wobei die erste Bestrahlungsvorrichtung (26) konfiguriert ist, zumindest den ersten Abschnitt (S1-S4) der Baufäche (16) zu bestrahlen, und die zweite Bestrahlungsvorrichtung (26) konfiguriert ist, zumindest den zweiten Abschnitt (S1-S4) der Baufläche (16) zu bestrahlen.

7. Vorrichtung (10) nach einem der vorangehenden Ansprüche,
wobei die Pulverauftragsvorrichtungen (20) konfiguriert sind, sich von einem Startbereich (22) zu einem Endbereich (24) der Baufläche (16) zu bewegen, während sie die Rohstoffpulverschichten erzeugen, wobei die Pulverauftragsvorrichtungen (20) konfiguriert sind, sich nach Erreichen des Endbereichs (24) zurück zum Startbereich (22) zu bewegen.

8. Vorrichtung (10) nach Anspruch 7,
wobei die Höhenposition der Pulverauftragsvorrichtungen (20) und/oder der Baufläche (16) derart einstellbar ist, dass die Pulverauftragsvorrichtungen (20) nach der erneuten Anordnung in dem Startbereich (22) eine weitere Rohstoffpulverschicht auf die oberste der Folge von Schichten aufbringen können.

9. Vorrichtung (10) nach Anspruch 7 oder 8,
wobei die Pulverauftragsvorrichtungen (20) nach Erreichen des Endbereichs (24) relativ zu der Baufläche (16) wie folgt bewegbar sind:
- zum Einstellen ihrer relativen Höhe zu der Baufläche (16); und/oder
- zum Durchführen einer seitlichen Bewegung in Bezug auf die Baufläche (16); und/oder
- zum Durchführen einer Bewegung entlang einer im Wesentlichen kreisförmigen Bahn.

10. Vorrichtung (10) nach einem der Ansprüche 7 bis 9,
wobei mindestens eine der Pulverauftragsvorrichtungen (20) entlang einer Endlosbahn (40) geführt wird, die den Startbereich (22) und den Endbereich (24) verbindet.

11. Vorrichtung (10) nach einem der vorangehenden Ansprüche,
wobei die Pulverauftragsvorrichtungen (20) konfiguriert sind, sich um eine gemeinsame Rotationsachse zu drehen, wobei sich die Achse in einem Winkel zu der Baufläche (16) erstreckt.

12. Verfahren zum Betreiben einer Vorrichtung (10) zur Herstellung eines dreidimensionalen Werkstücks, wobei die Vorrichtung (10) umfasst:
- einen Träger (14) zur Aufnahme eines Rohstoffpulvers (18),
- mindestens eine erste Bestrahlungsvorrichtung (26) zur selektiven Bestrahlung eines Rohstoffpulvers (18), das auf zumindest eine Baufläche (16) des Trägers (14) aufgebracht ist, mit einem elektromagnetischen Strahl oder einem Teilchenstrahl (B), um durch ein additives Schichtbauverfahren ein aus dem Rohstoffpulver (18) bestehendes Werkstück herzustellen, und
- mindestens eine erste und eine zweite Pulverauftragsvorrichtung (20),
wobei das Verfahren die Schritte umfasst:
- Betreiben der ersten und zweiten Pulverauftragsvorrichtung (20), um gleichzeitig Rohstoffpulver (18) auf derselben Baufläche (16) aufzubringen, um eine Folge von Rohstoffpulverschichten übereinander zu erzeugen; und
- Bestrahlen eines Abschnitts (S1-S4) der Baufläche (16) zwischen den Pulverauftragsvorrichtungen (20),
wobei die Baufläche (16) eine maximal mögliche Grundfläche des Werkstücks definiert, und wobei die Bestrahlungsvorrichtung (26) und/oder der von ihr emittierte Bestrahlungsstrahl (B) auf der Basis einer Bewegung von mindestens einer der Pulverauftragsvorrichtungen (20) bewegt werden,
wobei das Verfahren ferner ein Bewegen der Pulverauftragsvorrichtungen (20) entlang der oder quer zu der Baufläche (16) hintereinander und in einem variierenden Abstand zueinander umfasst, und
wobei der Abschnitt (S1-S4) zwischen den Pulverauftragsvorrichtungen (20) bestrahlt wird, bevor das Aufbringen einer unteren der Rohstoffpulverschichten abgeschlossen ist.

## Revendications

1. Appareil (10) de production d'une pièce tridimensionnelle,
l'appareil (10) comprenant:
- un charriot (14) pour recevoir une poudre de matière première (18),
- au moins un premier dispositif de rayonnement (26) pour soumettre sélectivement à un faisceau de rayonnement de particule ou électromagnétique (B) une poudre de matière première (18) disposée sur au moins une zone de construction (16) du charriot (14) afin de produire une pièce fabriquée à partir de ladite poudre de matière première (18) par procédé de fabrication additive, et
- au moins un premier et un second dispositif d'application de poudre (20) conçus pour déposer simultanément la poudre de matière première (18) sur la même zone de construction (16) pour produire une séquence de couches de poudre de matière première les unes sur les autres,
dans lequel
le dispositif de rayonnement (26) est conçu pour soumettre une section (S1-S4) de la zone de construction au rayonnement entre les dispositifs d'application de poudre (20);
la zone de construction (16) définit une empreinte maximum possible de la pièce;
le dispositif de rayonnement (26) et/ou le faisceau de rayonnement (B) émis sont ainsi mobiles sur la base d'un déplacement d'au moins l'un des dispositifs d'application de poudre (20); et
les dispositifs d'application de poudre (20) sont conçus pour se déplacer le long ou dans l'ensemble de la zone de construction (16) l'un derrière l'autre et à une distance variable l'un par rapport à l'autre,
dans lequel le dispositif de rayonnement (26) est conçu pour soumettre la section (S1-S4) au rayonnement entre les dispositifs d'application de poudre (20) avant que le dépôt d'une couche inférieure parmi les couches de poudre de matière première ne soit terminé.

2. Appareil (10) selon la revendication 1,
dans lequel les dispositifs d'application de poudre (20) sont conçu pour se déplacer par rapport à la zone de construction (16) de manière séparée l'un de l'autre.

3. Appareil (10) selon l'une quelconque des revendications précédentes,
dans lequel le déplacement d'au moins un des dispositifs d'application de poudre (20) est commandé sur la base d'un paramètre de rayonnement d'une couche de poudre de matière première précédente, ledit paramètre de rayonnement comprenant une étendue de rayonnement et/ou une progression de rayonnement de la couche de poudre de matière première précédente.

4. Appareil (10) selon l'une quelconque des revendications précédentes,
la position en hauteur des dispositifs d'application de poudre (20) est réglable par rapport à la zone de construction (16).

5. Appareil (10) selon l'une quelconque des revendications précédentes,
comprenant en outre un troisième dispositif d'application de poudre (20), les premier, deuxième et troisième dispositifs d'application de poudre (20) étant conçus pour déposer simultanément la poudre de matière première (18) sur la même zone de construction (16) de telle manière qu'ils renferment une première et une seconde section (S1-S4) de la zone de construction (16) entre eux.

6. Appareil (10) selon la revendication 5,
l'appareil (10) comprenant en outre un second dispositif de rayonnement (26), le premier dispositif de rayonnement (26) étant conçu pour soumettre au rayonnement au moins la première région (S1-S4) de la zone de construction (16) et le second dispositif de rayonnement (26) est conçu pour soumettre au rayonnement au moins la seconde section (S1-S4) de la zone de construction (16).

7. Appareil (10) selon l'une quelconque des revendications précédentes,
dans lequel les dispositifs d'application de poudre (20) sont conçus pour se déplacer d'une région de départ (22) à une région finale (24) de la zone de construction (16) pendant la production desdites couches en poudre de matière première, dans lequel après avoir atteint la région finale (24), les dispositifs d'application de poudre (20) sont conçus pour revenir à la position de départ (22).

8. Appareil (10) selon la revendication 7,
dans lequel la position en hauteur des dispositifs d'application de poudre (20) et/ou la zone de construction (16) est réglable de telle manière que, après avoir été placés dans la région de départ (22), les dispositifs d'application de poudre (20) peuvent déposer une autre couche de poudre de matière première sur le haut de celle la plus en haut de ladite séquence de couches.

9. Appareil (10) selon la revendication 7 ou 8,
dans lequel après avoir atteint la région finale (24), les dispositifs d'application de poudre (20) peuvent se déplacer par rapport à la zone de construction (16) selon au moins l'une des actions suivantes:
- réglage de leur hauteur relative par rapport à la zone de construction (16);
- déplacement des profils par rapport à la zone de construction (16); et
- déplacement le long d'un chemin sensiblement circulaire.

10. Appareil (10) selon l'une quelconque des revendications 7 à 9,
dans lequel au moins l'un des dispositifs d'application de poudre (20) est guidé le long d'une piste sans fin (40) reliant la région de départ (22) et la région finale (24).

11. Appareil (10) selon l'une quelconque des revendications précédentes,
dans lequel les dispositifs d'application de poudre (20) sont conçus pour tourner autour d'un axe de rotation commun, ledit axe s'étendant à un angle avec la zone de construction (16).

12. Procédé de fonctionnement d'un appareil (10) pour produire une pièce tridimensionnelle, l'appareil (10) comprenant:
- un charriot (14) pour recevoir une poudre de matière première (18),
- au moins un premier dispositif de rayonnement (26) pour soumettre sélectivement à un faisceau de rayonnement de particule ou électromagnétique (B) une poudre de matière première (18) disposée sur au moins une zone de construction (16) du charriot (14) afin de produire une pièce fabriquée à partir de ladite poudre de matière première (18) par procédé de fabrication additive, et
- au moins un premier et un second dispositif d'application de poudre (20),
le procédé comprenant les étapes consistant à:
- faire fonctionner le premier et un second dispositif d'application de poudre (20) conçus pour déposer la poudre de matière première (18) sur la même zone de construction (16) pour produire une séquence de couches en poudre de matière première les unes sur les autres; et
- soumettre une section (S1-S4) de la zone de construction au rayonnement entre les dispositifs d'application de poudre (20),
dans lequel la zone de construction (16) définit une empreinte maximum possible de la pièce, et dans lequel le dispositif de rayonnement (26) et/ou le faisceau de rayonnement (B) émis sont ainsi déplacés sur la base d'un déplacement d'au moins l'un des dispositifs d'application de poudre (20),
dans lequel le procédé consiste en outre à déplacer les dispositifs d'application de poudre (20) le long ou dans l'ensemble de la zone de construction (16) l'un derrière l'autre et à une distance variable l'un par rapport à l'autre, et
dans lequel la section (S1-S4) entre les dispositifs d'application de poudre (20) est soumise au rayonnement avant que le dépôt d'une couche inférieure parmi les couches de poudre de matière première ne soit terminé.
